# EUROPEAN PATENT SPECIFICATION

(11) **EP 1 097 461 B1**
(45) Date of publication and mention of the grant of the patent: **07.04.2004**
(21) Application number: 99957657.2
(22) Date of filing: 11.06.1999
(51) Int. Cl.: G21C 3/62

(54) **NUCLEAR FUEL PELLET**
KERNBRENNSTOFFTABLETTE
PASTILLE DE COMBUSTIBLE NUCLEAIRE

(30) Priority: 26.06.1998 GB 9813696
(43) Date of publication of application: 09.05.2001
(73) Proprietor: British Nuclear Fuels PLC, Warrington, Cheshire WA3 6AS (GB)
(72) Inventor: WOOD, Geoffrey A. British Nuclear Fuels plc, Salwick Preston PR4 0XJ (GB); Perkins, Christopher P. British Nuclear Fuelsplc, Salwick Preston PR4 0XJ (GB); PALMER, Ian D. British Nuclear Fuels plc, Salwick Preston PR4 0XJ (GB)
(74) Representative: Goddard, David John
(86) International application number: PCT/GB1999/001863
(87) International publication number: WO 2000/000985

(56) References cited:
- EP-A- 0 788 117
- H. ASSMANN ET AL.: "DOPING UO2 WITH NIOBIA - BENFICIAL OR NOT?" JOURNAL OF NUCLEAR MATERIALS, vol. 98, no. 1&2, May 1981 (1981-05), pages 216-220, XP002118654 Amsterdam NL
- P.T. SAWBRIDGE ET AL. : "THE CREEP OF UO2 FUEL DOPED WITH Nb2O5" JOURNAL OF NUCLEAR MATERIALS , vol. 97, no. 3, 1981, pages 300-308, XP002118655 Amsterdam NL

## Description

The present invention relates to the production of fuel pellets for nuclear reactors.

There is an increasing trend to the use of uranium oxide fuel having greater levels of enrichment to give higher fuel burn-up. The result of such a trend is to increase the residence time of any given fuel pin in the reactor. Therefore, it is necessary to produce fuel pins having a greater degree of confidence in their integrity.

Fuel pellets pressed from powders of uranium oxide and subsequently sintered under controlled conditions of time, temperature and atmosphere are well known. Such fuel pellets are normally generally right cylinders and many such pellets are packed in axial alignment in metal tubes of, for example, Zircaloy (trade name), an alloy of zirconium. The tubes are usually referred to as "cladding" and the filled tube as a "fuel pin". Many fuel pins are grouped together, often in a parallel aligned radial array to form a fuel element or fuel assembly.

In use, when the fuel elements are loaded into a reactor and producing power, two distinct phenomena occur: "pellet cladding interaction" (PCI); and, the generation of fission gas which ideally should be retained within the pellet oxide structure and not released into the cladding tube, hence "fission gas retention" (FGR). Both will be explained in more detail below.

During operation of a nuclear reactor, the high temperatures generated result in the oxide fuel pellets expanding and the outer surface of the pellet coming into contact with the inner surface of the cladding producing mechanical stress (PCI). The mechanical stress is further exacerbated by the production of iodine as a fission product during the nuclear reaction. The combination of mechanical stress and iodine which acts as a stress corrosion agent attacking the cladding material grain boundaries can cause rupture of the cladding in extreme cases. Generally, a small grain size is beneficial in promoting creep of the oxide pellet at the surface to give a stress relieving effect.

The second effect which occurs during the nuclear reaction is the generation of many different fission gas products including iodine referred to above. The fission gas products are created within the oxide structure as atoms which diffuse to grain boundaries and nucleate thereat. Gas bubbles are eventually formed, the bubbles coalescing with each other and being finally given off and known as "fission gas release". It is undesirable for the fission gases to be released and fuel pellets are generally produced with a large grain size to promote retention of the fission gases (FGR). A large grain size promotes retention due to the fact that the fission gas atoms have further to diffuse through the structure before they reach a grain boundary where they can nucleate.

As will be noted, the requirements of promoting stress relief by a small grain size to optimise creep and reduce PCI and, a large grain size to maximise FGR are mutually conflicting.

European Patent Application 82305260.0 (EP 0076680) describes the doping of uranium dioxide or ammonium diuranate as a precursor thereof with one of a selected group of elements, including niobium, to produce a large grain size. Similarly, Japanese Patent Application 04070594 describes the doping of uranium oxide with Nb(IV) oxide, and Japanese Patent Application 03102292 describes the doping of uranium oxide with an intermetallic compound or an oxide which may include niobium oxide.

UK Patent Application 8517110 (GB2177249) describes the preparation of large grain size materials using seed material composed essentially of single crystals, but makes no reference to niobia doping. UK Patent Application 23791/78 (GB1600169) discloses the coating of nuclear fuels pellets with a getter material selected from a group including metallic niobium, but no doping of the pellet material itself is suggested.

Proposals have been made to produce fuel pellets having two distinct regions: an outer annular region having a small grain size to minimise PCI; and, an inner core region having a large grain size to maximise FGR. Such structures are described in 89JP-311936; 87JP-262652; and, 83SU-600645. The pellets are generally made by pressing an outer annulus component and a separate inner core component, fitting the two together and then sintering. The pressing conditions are controlled so that during sintering the outer annulus shrinks onto the core and diffusion bonding of the two components occurs.

GB-B-2020641 of common ownership herewith describes the use of niobium pentoxide (henceforth referred to as "niobia") as a dopant in uranium oxide fuel pellets. The effect of the niobia is stated to be that of increasing the diffusion rates during sintering so promoting the generation of a large grain size in the pellet. It is also stated that the increased diffusion rate caused by niobia does not also substantially affect the rate of diffusion of the fission gas products within the grains. Thus, a large grain size may be achieved with no apparent adverse effect of also increasing the diffusion rate of the fission gas products. However, we have now found that the presence of niobia does adversely affect the diffusion rate of fission gas.

It is an object of the present invention to provide a functionally graded uranium oxide fuel pellet having improved creep stress relaxation properties at the surface to minimise PCI and improved FGR in its core.

The present invention provides a uranium oxide fuel pellet comprising an inner region and an outer region about the inner region, wherein the uranium oxide of at least a portion of said outer region is rich in niobia relative to the inner region. Other features and advantages of the invention are outlined in the following description and the appended claims to which the reader is referred.

In this specification, the term "niobia" is used. The addition is usually made in the form of niobium pentoxide, however, during processing such as sintering, the composition may change due to the effects of a reducing atmosphere or alternate reducing/oxidising atmospheres so that the "niobia" in the final material as produced, or becomes in use in a reactor, may not be niobium pentoxide. Thus, the term "niobia" used herein is intended to cover all forms of niobium and niobium oxides which may be used or which are formed.

We have found that contrary to the teachings of the prior art, a uranium oxide fuel material which nevertheless has a large grain size due to the increased diffusion rates promoted by the addition of niobia actually has a greater creep rate than does a material having a smaller grain size thus, reducing PCI.

We have also found that whilst a large grain size per se in a core region of the pellet is beneficial for FGR compared with a smaller grain size in the same material, it is preferable to produce a larger grain size by means other than doping with niobia additions which we have now found may increase the diffusion rate of fission gas within the structure. One such method of achieving a larger grain size in the structure is by seeding of the powder used for pressing with uranium dioxide (UO₂) crystal grains of a desired size range as distinct from the agglomerates of UO₂ crystallites which form the principal bulk of the powder. We have found that an average grain size of about 10 to 15µm in the sintered pellets produces acceptable performance with regard to FGR but that an average grain size of greater than about 25µm produces enhanced performance with regard to FGR.

The content of niobia in the surface region may be in the range from about 0.1 to 0.5 weight percent with a content of about 0.3 weight percent being preferred.

The average grain size of a prior art so-called "duplex" pellet having distinct annulus and core regions as described above with reference to the prior art may typically be in the range from about 0.25 to 2.5µm. In the pellet of the present invention, the average grain size in the surface region may be greater than about 25µm and typically in the range from about 35 to 50µm. It should be noted that the method of measuring average grain size in this specification is by the linear intercept method.

The pellets according to the present invention may be made having the duplex structure as described above with a distinct outer annulus and a distinct core. The pellets may be made by two stage pressing and assembling as described or as a unitary construction comprising multiple pressing stages in a complex die arrangement on a press of the type described, for example, in International Patent Application Number WO93/18878.

Although the pellet may be made having two distinct regions produced by pressing operations with two powder compositions constituting the outer and inner regions, a homogeneous pellet having the surface regions enhanced in niobia content would fall within the inventive concept of the present invention.

In a duplex type structure, the annulus and core regions may each comprise about 50vol% of the total pellet volume for example.

In order that the present invention may be more fully understood, examples will now be described by way of illustration only with reference to the accompanying drawings, of which:
Figures 1 and 2 show axial and radial cross sections through a schematic representation of a fuel pellet according to the present invention, respectively; and,
Figure 3 which shows a schematic representation of a pressing sequence for making a fuel pellet according to the present invention on an integrated die assembly.

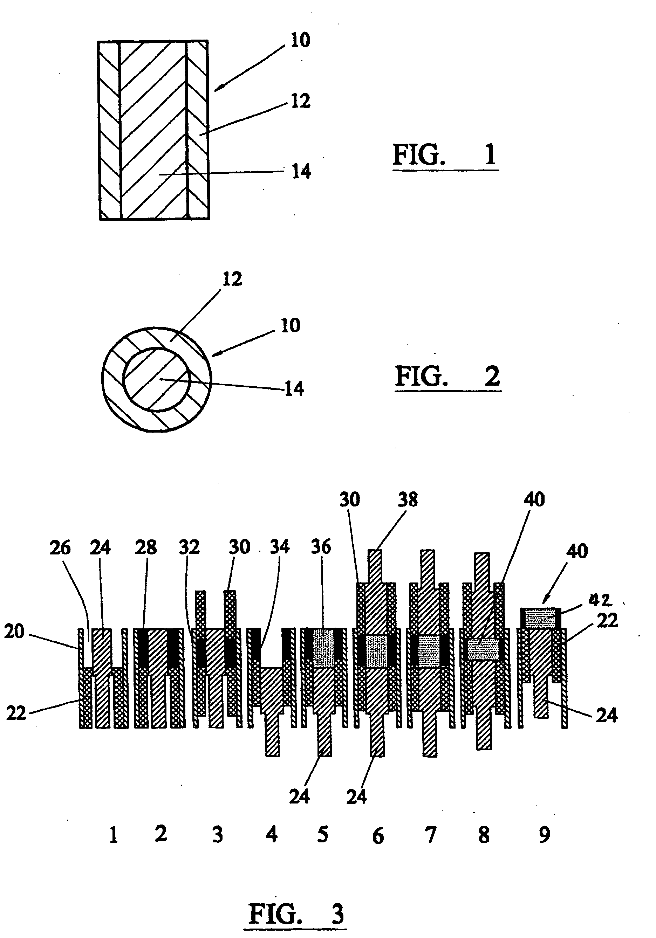

Figures 1 and 2 show a pellet generally at 10. The pellet comprises an outer region 12 having a composition including a niobia addition and a core 14 which is substantially free of niobia. The axial end faces of the pellet are often provided in a slightly dished form to accommodate expansion in the axial direction in use and also to provide space for creep relaxation under stress at high temperatures but this has not been shown in the interests of clarity.

In one method of manufacture the annular region 12 and core region 14 are pressed separately by known techniques. The two components are assembled together and sintered under known conditions of about 1700/1750°C for about 4-5 hours under a hydrogen and moisture containing atmosphere. The green properties of the pressed annulus cause it to shrink more than the core with the result that under the sintering conditions the annulus grips the core and the two become diffusion bonded together.

An alternative method of manufacture is illustrated with reference to Figure 3 which show nine stages in the pressing of a duplex pellet on an integrated die assembly. The die assembly comprises a single outer die 20 with a multiple inner punch assembly, the components of which are enabled to move independently by means of a hydraulically controlled matrix in a mechanical press for example. At Step 1 the die 20 has an outer punch 22 and a stepped inner punch 24 creating a cavity 26 for filling with powder 28 as shown in Step 2. A third punch member 30 compresses the powder 28 to form a self supporting green compact 32 as shown in Step 3. The punch member 30 is withdrawn and the stepped inner punch member 24 is lowered to a position below the lowermost extent 34 of the green compact 32 as shown in Step 4. Powder 36 is filled into the core void so formed in Step 4 and as shown in Step 5. The outer punch 30 is replaced together with a coaxial top punch 38, punches 38 and 24 being advanced towards each other to compress the core powder filling 36 as shown in Steps 6 and 7 to create a unified green compact 40 comprising the outer compacted annulus 32 and inner compressed core 42 as shown in Step 8. The upper punches 30 and 38 are withdrawn and punches 20 and 24 are advanced simultaneously to eject the green compact 40 from the die. The green compact 40 is then sintered.

In a first example of a sintered fuel pellet according to the present invention, the core region 14 had an average grain size of 12-15µm and was substantially free of niobia whereas the annulus portion 12 comprised a grain size in excess of 25µm and had an addition of 0.3 wt% niobia.

In the second example of a sintered fuel pellet according to the present invention the core region 14 comprised a grain size in excess of 25µm being produced by seeding with UO₂ crystals and the annulus portion 12 had a grain size in excess of 25µm and contained 0.3wt% of niobia.

## Claims

1. A uranium oxide fuel pellet comprising an inner region and an outer region about the inner region, wherein the uranium oxide of at least a portion of said outer region is rich in niobia relative to the inner region.

2. A fuel pellet according to claim 1 wherein the content of niobia in said portion is from about 0.1 to 0.5 weight percent.

3. A fuel pellet according to claim 1 or claim 2 wherein the niobia content in said portion is about 0.3 weight percent.

4. A fuel pellet according to any preceding claim wherein the inner region of the pellet is substantially free of niobia.

5. A fuel pellet according to any preceding claim wherein the said portion has an average grain size, as hereinbefore defined, of greater than 25µm.

6. A fuel pellet according to any preceding claim wherein the inner region has a grain size smaller than the grain size of said portion.

7. A fuel pellet according to any one of claims 1 to 5 wherein the grain size of the inner region is greater than 25µm.

8. A fuel pellet according to any preceding claim wherein the uranium oxide in the inner region is seeded to produce a large grain size.

9. A fuel pellet according to any preceding claim wherein the said portion is substantially the entire outer region.

10. A fuel pellet according to any preceding claim wherein the pellet is cylindrical and the inner and outer regions are coaxial cylindrical regions.

11. A fuel pellet according to claim 9 or claim 10 wherein the outer region comprises a distinct annulus.

12. A fuel pellet according to any preceding claim wherein inner and outer regions have been individually produced and sintered together.

13. A fuel pellet according to any preceding claim wherein the outer and inner regions each constitute about 50 volume percent of the pellet volume.

## Patentansprüche

1. Uranoxid-Brennstofftablette mit einem inneren Bereich und einem äußeren, den inneren Bereich umgebenden Bereich, wobei das Uranoxid mindestens eines Teils des äußeren Bereichs gegenüber dem inneren Bereich mit Niob angereichert ist.

2. Brennstofftablette nach Anspruch 1, wobei der Niob-Gehalt in dem Teil etwa 0,1 bis 0,5 Gew.-% beträgt.

3. Brennstofftablette nach Anspruch 1 oder Anspruch 2, wobei der Niob-Gehalt in dem Teil etwa 0,3 Gew.-% beträgt.

4. Brennstofftablette nach einem vorhergehenden Anspruch, wobei der innere Bereich der Tablette im wesentlichen frei von Niob ist.

5. Brennstofftablette nach einem vorhergehenden Anspruch, wobei der Teil eine mittlere Korngröße, wie zuvor definiert, von größer als 25 µm aufweist.

6. Brennstofftablette nach einem vorhergehenden Anspruch, wobei der innere Bereich eine kleinere Korngröße als die Korngröße des Teiles aufweist.

7. Brennstofftablette nach einem der Ansprüche 1 bis 5, wobei die Korngröße des inneren Bereichs größer als 25 µm ist.

8. Brennstofftablette nach einem vorhergehenden Anspruch, wobei das Uranoxid in dem inneren Bereich beimpft ist, um eine große Korngröße zu erzielen.

9. Brennstofftablette nach einem vorhergehenden Anspruch, wobei der Teil im wesentlichen der gesamte äußere Bereich ist.

10. Brennstofftablette nach einem vorhergehenden Anspruch, wobei die Tablette zylindrisch ist und der innere und der äußere Bereich koaxiale zylindrische Bereiche sind.

11. Brennstofftablette nach Anspruch 9 oder Anspruch 10, wobei der äußere Bereich einen deutlichen Ring umfaßt.

12. Brennstofftablette nach einem vorhergehenden Anspruch, wobei der innere und der äußere Bereich einzeln hergestellt und zusammen gesintert sind.

13. Brennstofftablette nach einem vorhergehenden Anspruch, wobei der äußere und der innere Bereich jeweils etwa 50 Vol.-% des Tablettenvolumens ausmachen.

## Revendications

1. Pastille de combustible d'oxyde d'uranium comprenant une région intérieure et une région extérieure autour de la région intérieure, **caractérisée en ce que** l'oxyde d'uranium d'au moins une partie de ladite région extérieure est riche en niobia par rapport à la région intérieure.

2. Pastille de combustible selon la revendication 1, **caractérisée en ce que** la proportion de niobia dans ladite partie est d'environ 0,1 à 0,5% en poids.

3. Pastille de combustible selon la revendication 1 ou 2, **caractérisée en ce que** la proportion de niobia dans ladite partie est d'environ 0,3% en poids.

4. Pastille de combustible selon l'une des revendications précédentes, **caractérisée en ce que** la région intérieure de la pastille est sensiblement sans niobia.

5. Pastille de combustible selon l'une des revendications précédentes, **caractérisée en ce que** ladite partie présente une taille moyenne de grain, comme précédemment définie, supérieure à 25µm.

6. Pastille de combustible selon l'une des revendications précédentes, **caractérisée en ce que** la région intérieure présente une taille de grain inférieure à la taille de grain de ladite partie.

7. Pastille de combustible selon l'une des revendications 1 à 5, **caractérisée en ce que** la taille de grain de la région intérieure est supérieure à 25µm.

8. Pastille de combustible selon l'une des revendications précédentes, **caractérisée en ce que** l'oxyde d'uranium dans la région intérieure est ensemencé pour produire une taille de grain élevée.

9. Pastille de combustible selon l'une des revendications précédentes, **caractérisée en ce que** ladite partie correspond sensiblement à la région extérieure entière.

10. Pastille de combustible selon l'une des revendications précédentes, **caractérisée en ce que** la pastille est cylindrique et **en ce que** les régions intérieure et extérieure sont des régions cylindriques coaxiales.

11. Pastille de combustible selon la revendication 9 ou 10, **caractérisé en ce que** la région extérieure comprend une région annulaire distincte.

12. Pastille de combustible selon l'une des revendications précédentes, **caractérisée en ce que** les régions intérieure et extérieure ont été produites de manière individuelle et frittées ensemble.

13. Pastille de combustible selon l'une des revendications précédentes, **caractérisée en ce que** les régions extérieure et intérieure constituent chacune environ 50% en volume du volume de la pastille.
